# EUROPÄISCHE PATENTSCHRIFT

(11) **EP 1 799 522 B1**
(45) Veröffentlichungstag und Bekanntmachung des Hinweises auf die Patenterteilung: **16.09.2009**
(21) Anmeldenummer: 05762941.2
(22) Anmeldetag: 14.07.2005
(51) Int. Cl.: B60T 8/48

(54) **VERFAHREN ZUM VORBEFÜLLEN EINES NIEDERDRUCKSPEICHERS EINER KFZ-BREMSANLAGE**
METHOD FOR PREFILLING A LOW-PRESSURE RESERVOIR ON A MOTOR VEHICLE BRAKING SYSTEM
PROCEDE POUR PREREMPLIR UN ACCUMULATEUR BASSE PRESSION D'UN SYSTEME DE FREINAGE DE VEHICULE AUTOMOBILE

(30) Priorität: 09.09.2004 DE 102004044337; 16.10.2004 DE 102004050755
(43) Veröffentlichungstag der Anmeldung: 27.06.2007
(73) Patentinhaber: ROBERT BOSCH GMBH, 70442 Stuttgart (DE)
(72) Erfinder: BAREISS, Alexander, 87509 Immenstadt (DE)
(86) Internationale Anmeldenummer: PCT/EP2005/053374
(87) Internationale Veröffentlichungsnummer: WO 2006/027286

(56) Entgegenhaltungen:
- DE-A1- 4 033 024
- DE-A1- 10 059 348
- DE-A1- 19 841 152
- DE-C1- 19 716 404

## Beschreibung

Die Erfindung betrifft ein Verfahren zum Vorbefüllen eines Niederdruckspeichers einer Kfz-Bremsanlage gemäß dem Oberbegriff des Patentanspruchs 1, sowie eine Kfz-Bremsanlage gemäß dem Oberbegriff des Patentanspruchs 6.

Moderne Kfz-Bremsanlagen, die zur Durchführung einer Fahrdynamik- (ESP) oder Traktionsregelung ausgelegt sind, umfassen üblicherweise eine Hydraulikpumpe, die von einem Steuergerät angesteuert wird. In einer kritischen Fahrsituation wird die Hydraulikpumpe automatisch angesteuert und erhöht den an der Radbremse wirkenden Bremsdruck, wobei sie Bremsflüssigkeit aus dem Bremsflüssigkeitsbehälter oder einem Niederdruckspeicher ansaugt. Der Bremsdruck am Rad wird i.d.R. durch Betätigung eines Einlassventils und eines Auslassventils moduliert, während die Hydraulikpumpe mit einer vorgegebenen Nennleistung läuft und in Kombination mit einem Umschaltventil das System auf einen Systemdruck einstellt.

Aus der DE 100 59 348 A1 ist ein Verfahren zur Ansteuerung einer Bremsvorrichtung in einem Kraftfahrzeug mit elektrisch gesteuerten Hydraulikventilen und einer Hydraulikpumpe bekannt. Dabei werden ein oder mehrere vorhandene, für hydraulische Steuerungsfunktionen notwendige Ventilspulen zwecks einer elektrischen Beheizung eines oder mehrerer, diese Spulen aufnehmende Träger bewusst für längere Zeiträume als es für die Regelfunktion notwendig ist und/oder bewusst in Zeiträumen, in denen es für die Regelungsfunktion nicht notwendig ist, angesteuert.

Aus der DE 197 16 404 C1 ist eine hydraulische Bremsanlage für Kraftfahrzeuge bekannt. Diese umfasst eine Bremsdruckgebereinheit, die durch Einleitung einer Betätigungskraft über ein Bremspedal betätigbar ist, um einen Bremsdruck für eine Radbremse zu erzeugen, wobei zur Erzeugung eines Bremsdruckes für die Radbremse die Bremsdruckgebereinheit eine Hydraulikkammer aufweist, deren Volumen sich bei Betätigung der Bremsdruckgebereinheit verkleinert. Die Bremsanlage soll kompakter, mit einem geringeren Kostenaufwand herstellbar sowie komfortabel betätigbar gestaltet werden. Dazu wird vorgeschlagen, dass zur Bremskraftverstärkung die Bremsdruckgebereinheit eine weitere Hydraulikkammer aufweist, deren Volumen sich bei Betätigung der Bremsdruckgebereinheit verkleinert und zwischen der weiteren Hydraulikkammer und der Radbremse eine Pumpe angeordnet ist, die in Richtung von der weiteren Hydraulikkammer zu der Radbremse fördert, so dass sich in der Radbremse ein höherer Bremsdruck als der normalerweise durch Einleitung der Betätigungskraft über das Bremspedal in der Hydraulikkammer erzeugte Bremsdruck einstellt.

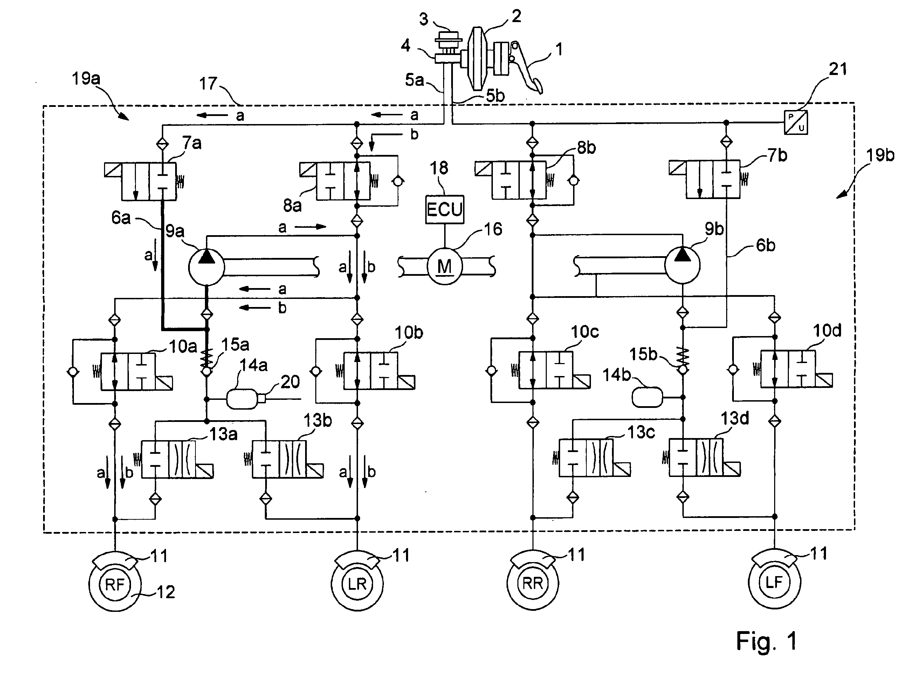

Fig. 1 zeigt beispielhaft ein aus dem Stand der Technik bekanntes hydraulisches Bremssystem 17, das für die Durchführung einer Fahrdynamikregelung ausgelegt ist. Das Bremssystem 17 umfasst zwei Bremskreise 19a,19b in X-Aufteilung, die symmetrisch ausgebildet sind. Im Folgenden wird daher nur auf den in der Fig. links dargestellten Teil 19a Bezug genommen.

Das Bremssystem 17 umfasst ein Fuß-Bremspedal 1, einen Bremskraftverstärker 2 mit einem daran angeschlossenen Hauptbremszylinder 4, auf dem ein Bremsflüssigkeitsbehälter 3 angeordnet ist. Bei einer Betätigung des Fuß-Bremspedals 1 wird in den Hauptbremsleitungen 5a,5b ein entsprechender Druck erzeugt, der über ein Umschaltventil 8a und die beiden Einlassventile 10a,10b auf die Radbremsen 11 des rechten Vorderrads (RF) und des linken Hinterrads (LR) wirkt. Der Pfad, in dem sich bei Betätigung des Fuß-Bremspedals 1 Druck aufbaut, ist durch Pfeile b gekennzeichnet. In diesem Grundzustand (stromloser Zustand) ist das Umschaltventil 8a offen und ein parallel dazu angeordnetes Hochdruck-Schaltventil 7a geschlossen. Das Umschaltventil 8a dient dazu, zwischen einem Fußpedal-Betrieb und einem automatischen Regelbetrieb mit aktivem Druckaufbau durch das System selbst hin und her zu schalten.

Bei einem Eingriff der Fahrdynamikregelung wird die Hydraulikpumpe 9a bzw. deren Motor 16 von einem Steuergerät 18 angesteuert und automatisch Bremsdruck aufgebaut der auf die Radbremsen 11 wirkt. In diesem Regelungszustand ist das Umschaltventil 8a angesteuert und das Hochdruck-Schaltventil 7a, das zwischen dem Haupt-Bremszylinder 4 und der Hydraulikpumpe 9a angeordnet ist, geöffnet. Die Hydraulikpumpe 9a fördert das Hydraulikfluid dann entlang der Pfade a zu den Radbremsen 11. Das Hydraulikfluid strömt somit aus dem Bremsflüssigkeitsbehälter 3, durch die Hauptbremsleitung 5a, das Hochdruck-Schaltventil 7a, eine Ansaugleitung 6a, durch die Hydraulikpumpe 9a und weiter durch die Einlassventile 10a,10b in die Radbremsen 11. Zur Modulation des Bremsdrucks werden die Einlassventile 10a,10b - Funktion "Druck halten" - und die Auslassventile 13a,13b - Funktion "Druck abbauen" - entsprechend geöffnet oder geschlossen. Im Zustand "Druck abbauen" fließt das Hydraulikfluid durch die Auslassventile 13a,13b in einen Niederdruckspeicher 14a, aus dem die Hydraulikpumpe 9a das Hydraulikfluid ansaugt und zurück in den Systemdruckkreis bzw. zu den Radbremsen 11 pumpt.

Eine schnelle Reaktion des Fahrdynamikregelungssystems ist insbesondere dann möglich, wenn zu Beginn einer Regelung ausreichend Hydraulikfluid im Niederdruckspeicher 14 enthalten ist, das von der Hydraulikpumpe 9a angesaugt werden kann. Um vor einer Regelung einen ausreichenden Füllzustand des Niederdruckspeichers 14a zu gewährleisten, ist es bekannt, den Niederdruckspeicher 14a teilweise zu befüllen (Vorbefüllung). Zu diesem Zweck werden die Hydraulikpumpe 9a angesteuert und die Ventile 7a und 13a geöffnet und dadurch Hydraulikfluid in den Niederdruckspeicher 14a gepumpt. Bei diesem Vorgang entsteht durch den Betrieb der Hydraulikpumpe 9a und das Betätigen der Ventile 7a und 13a ein relativ lautes Geräusch, das störend wirkt und den Fahrer irritieren kann.

Es ist daher die Aufgabe der vorliegenden Erfindung, ein Verfahren zum Vorbefüllen des Niederdruckspeichers bzw. ein entsprechend ausgelegtes Bremssystem zu entwickeln, bei dem die Hydraulikpumpe zur Vorbefüllung des Speichers nicht betätigt werden muss und somit auch keine störenden Geräusche entstehen.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Gedanke der Erfindung besteht darin, den vom Fahrer bei einer Betätigung des Bremspedals erzeugten Druck dazu zu nutzen, den Niederdruckspeicher vorzubefüllen. Erfindungsgemäß wird hierzu eine Betätigung des Fuß-Bremspedals sensorisch überwacht und, wenn eine Betätigung erkannt wurde, zunächst das der Radbremse vorgeschaltete Ventil (vorzugsweise das Umschaltventil) geschlossen, um den an der Radbremse wirkenden Bremsdruck einzusperren, und dann wenigstens ein Auslassventil geöffnet, um den durch das Umschaltventil immer noch eingesperrten Druck in den Niederdruckspeicher zu entlassen. Dieses Vorbefüll-Verfahren hat den Vorteil, dass die Hydraulikpumpe nicht betätigt werden muß, sondern der Niederdruckspeicher allein durch die Bremsenbetätigung befüllt wird. Dadurch entsteht insbesondere kein störendes Anlaufgeräusch der Hydraulikpumpe.

Das Auslassventil wird vorzugsweise erst nach dem Schließen des Umschaltventils geöffnet, damit das Bremspedal bei der Betätigung nicht zu weit nach unten durchsackt.

Das erfindungsgemäße Vorbefüll-Verfahren wird vorzugsweise im Stillstand des Fahrzeugs, vor Fahrbeginn (d.h. dem eigentlichen Losfahren) durchgeführt, und wird vorzugsweise noch bevor die Zündung eingeschaltet wurde begonnen. Die Sensorik zum Erkennen einer Betätigung des Fuß-Bremspedals ist in diesem Fall derart auszulegen, dass sie bereits vor dem Einschalten der Zündung aktiv sein kann.

Um den Fahrer bereits vor dem Starten des Motors, bzw. zumindest vor dem Losfahren, zu einer Bremsbetätigung zu veranlassen, ist das Fahrzeug vorzugsweise derart eingerichtet, dass generell ein Start des Verbrennungsmotors nur dann möglich ist, wenn der Fahrer währenddessen das Fuß-Bremspedal betätigt (ähnlich wie bei Fahrzeugen mit Automatikgetriebe, bei denen die Fußbremse betätigt werden muß, um den Automatikhebel in die Fahrstellung zu bewegen).

Zum Erkennen einer Bremspedal-Betätigung kann z. B. der (üblicherweise ohnehin bereits vorhandene) Vordrucksensor ausgewertet werden oder ein Pedalwertgeber, wie z.B. ein Weg- oder Kraftsensor am Bremspedal vorgesehen sein.

Gemäß einer bevorzugten Ausführungsform der Erfindung läuft das Vorbefüll-Verfahren wie folgt ab: In einem ersten Schritt wird eine Betätigung des Fuß-Bremspedals durch den Fahrer sensorisch erkannt und nach Erreichen eines vorgegebenen Bremsdrucks das Umschaltventil geschlossen. Nachdem der Fahrer wieder vom Bremspedal gegangen ist und der Bremsdruck (Vordruck) einen vorgegebenen Wert wieder unterschreitet, wird wenigstens eines der Auslassventile geöffnet, um den Bremsdruck in den Niederdruckspeicher zu entlassen. Das Auslassventil wird deshalb vorzugsweise erst nach dem Entlasten des Bremspedals geöffnet, weil verhindert werden sollte, dass das Fahrzeug ungewollt anrollt, wenn es auf einer Steigung geparkt ist.

Nach dem Vorbefüllen des Niederdruckspeichers werden die betätigten Ventile vorzugsweise wieder in ihre Ausgangsstellung zurück gebracht.

Der Niederdruckspeicher wird vorzugsweise nur bis zu einem vorgegebenen Füllstand befüllt, um dem übrigen Bremssystem nicht zuviel Bremsflüssigkeit zu entziehen. Zu diesem Zweck umfasst der Niederdruckspeicher vorzugsweise einen Füllstandssensor, der entsprechende Füllstandsinformationen an das Steuergerät liefert. Bei Erreichen eines vorgegebenen Füllstandes wird die Leitung zum Niederdruckspeicher vorzugsweise unterbrochen und der restliche Druck über das Umschaltventil in Richtung des Hauptbremszylinders geleitet.

Nach einem Regeleingriff z. B. der Fahrdynamikregelung, bei dem die Hydraulikpumpe Fluid aus dem Speicher gesaugt hat, wird der Füllstand des Niederdruckspeichers vorzugsweise wieder auf ein vorgegebenes Niveau gebracht. Dies kann in bekannter Weise mittels der Hydraulikpumpe gesteuert werden oder, wie vorstehend beschrieben, durch eine Betätigung des Fuß-Bremspedals erfolgen. Dadurch ist sichergestellt, dass gleiche Startbedingungen für einen nachfolgenden Regeleingriff vorhanden sind und somit eine schnelle Reaktion des Regelsystems erfolgen kann.

Eine Kfz-Bremsanlage, die zur Durchführung des Vorbefüll-Verfahrens entsprechend eingerichtet ist, umfasst neben steuerbaren Ventilen und einer Hydraulikpumpe auch ein Steuergerät, mit dem die Hydraulikpumpe und die steuerbaren Ventile angesteuert werden. Das Steuergerät ist erfindungsgemäß derart programmiert, dass das vorstehend beschriebene Vorbefüll-Verfahren durchgeführt werden kann.

Die Erfindung wird nachstehend anhand von beigefügten Zeichnungen beispielhaft näher erläutert. Es zeigen:
Fig. 1 eine aus dem Stand der Technik bekannte Kfz-Bremsanlage, die zum Durchführen einer Druckspeicher-Vorbefüllung eingerichtet ist; und
Fig. 2 die wesentlichen Verfahrensschritte eines Verfahrens zum Vorbefüllen eines Niederdruckspeichers in Form eines Flussdiagramms.

Fig. 1 zeigt eine bekannte Kfz-Bremsanlage 17 in X-Aufteilung. Bezüglich der Erläuterung der einzelnen Elemente und der Funktionsweise wird auf die Beschreibungseinleitung verwiesen.

Im Unterschied zu baugleichen, aus dem Stand der Technik bekannten Kfz-Bremsanlagen, ist diese Bremsanlage 17 für die Durchführung einer Vorbefüll-Prozedur ausgelegt, bei der eine Bremspedal-Betätigung dazu genutzt wird, den Niederdruckspeicher 14a bzw. 14b vorzubefüllen. Damit wird erreicht, dass im Falle einer sicherheitskritischen Fahrsituation, in der z. B. die Fahrdynamikregelung in den Fahrbetrieb eingreift, ausreichend Bremsflüssigkeit gespeichert ist, die von der Hydraulikpumpe 9a bzw. 9b schnell angesaugt werden kann. Das Vorbefüll-Verfahren wird dabei von einem Steuergerät 18 gesteuert, das mit den Ventilen 7,8,10,13, einem Füllstandssensor 20 und einem Vordrucksensor 21 verbunden ist.

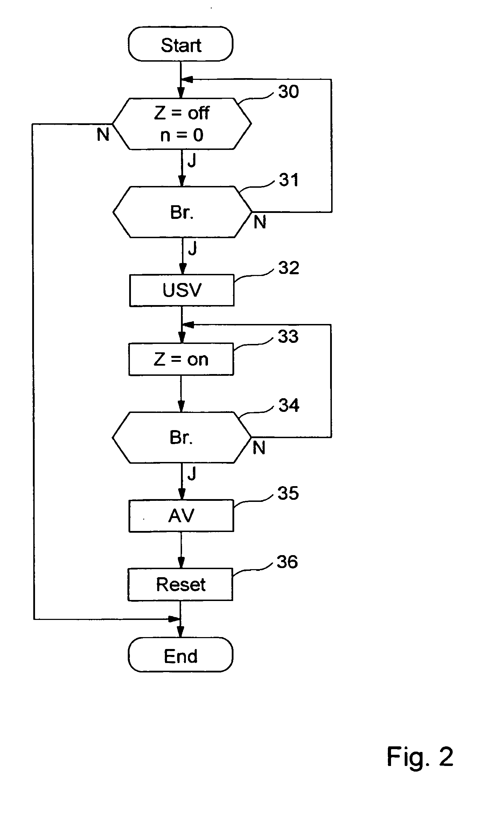

Fig. 2 zeigt ein Flußdiagramm mit den wesentlichen Verfahrensschritten beim Vorbefüllen der Niederdruckspeicher 14a,14b. In Schritt 30 wird zunächst ermittelt, ob die Zündung ausgeschaltet ist und sich das Fahrzeug im Stillstand befindet. Falls nein (N), endet das Verfahren. Falls ja (J), wird in Schritt 31 anhand des Vordrucksensors 21 (oder einer anderen Sensorik) überprüft, ob der Fahrer das Fuß-Bremspedal 1 betätigt und der Bremsdruck einen vorgegebenen Schwellenwert überschreitet. In diesem Fall (J) werden die Umschaltventile 8a,8b geschlossen und damit der Bremsdruck an den Radbremsen 11 eingesperrt (Schritt 32).

Um den Fahrer beim Start des Fahrzeugs zu einer Bremsbetätigung zu veranlassen, ist das Fahrzeug vorzugsweise derart eingerichtet, dass sich der Verbrennungsmotor nur dann starten lässt, wenn der Fahrer die Betriebsbremse betätigt. In Schritt 33 kann nun der Verbrennungsmotor gestartet werden.

In Schritt 34 wird überprüft, ob der Fahrer das Bremspedal nach dem Start wieder loslässt. Dies kann ebenfalls durch den Vordrucksensor 21 überwacht werden. Wenn der Bremsdruck (Vordruck) einen vorgegebenen Schwellenwert unterschreitet (Fall J), wird in Schritt 35 wenigstens eines der Auslassventile 13a,13b bzw. 13c,13d geöffnet und der eingesperrte Druck in die Niederdruckspeicher 14a,14b entlassen. Andernfalls (N) wird der Vordruck weiter überwacht.

Während der Vorbefüllung wird der Füllstand der Niederdruckspeicher 14a,14b mittels der Füllstandssensoren 20 überwacht. Wenn der Füllstand ein vorgegebenes Niveau überschreitet, wird der übrige Bremsdruck zurück in Richtung des Haupt-Bremszylinders 4 entlassen. Hierzu werden die Umschaltventile 8 wieder geöffnet und die Auslassventile 13 geschlossen.

Nach dem Vorbefüllen der Niederdruckspeicher 14a,14b werden die Ventile 8,13 in Schritt 36 wieder in ihre Ausgangsstellung (stromlos offen bzw. stromlos geschlossen) zurück gebracht.

### Bezugszeichenliste

- 1: Fuß-Bremspedal
- 2: Bremskraftverstärker
- 3: Bremsflüssigkeitsbehälter
- 4: Hauptbremszylinder
- 5a,5b: Hauptbremsleitungen
- 6a,6b: Ansaugleitungen
- 7a,7b: Hochdruckschaltventile
- 8a,8b: Umschaltventile
- 9a,9b: Hydraulikpumpen
- 10a-10d: Einlassventile
- 11: Radbremsen
- 12: Bremsscheiben
- 13a-13d: Auslassventile
- 14a,14b: Niederdruckspeicher
- 15a,15b: Rückschlagventile
- 16: Pumpenmotor
- 17: ESP-Hydraulik
- 18: Steuergerät
- 19a,19b: Bremskreise
- 20: Füllstandssensor
- 21: Vordrucksensor
- 30-36: Verfahrensschritte

## Patentansprüche

1. Verfahren zum Vorbefüllen eines Niederdruckspeichers (14) einer Kfz-Bremsanlage (17), die ein zwischen einem Hauptbremszylinder (4) und dem Einlassventil (10) einer Radbremse (11) angeordnetes Ventil (8), ein der Radbremse (11) nachgeordnetes Auslassventil (13) und einen in der Ansaugleitung (6) einer Hydraulikpumpe (9) und am Ausgang des Auslassventils (13) angeordneten Niederdruckspeicher (14) umfasst, umfassend folgende Schritte:
- Aufbauen von Bremsdruck durch Betätigen des Fuß-Bremspedals (1),
- Schließen des Ventils (8), um den an der Radbremse (11) wirkenden Bremsdruck einzusperren, und
- Öffnen des Auslassventils (13), um den Bremsdruck in den Niederdruckspeicher (14) zu entlassen,
**dadurch gekennzeichnet,**
**dass** die Betätigung des Fuß-Bremspedals (1) und das Schließen des Ventils (8) vor dem Einschalten der Zündung des Kraftfahrzeugs erfolgt.

2. Verfahren nach Anspruch 1, **dadurch gekennzeichnet, dass** das Vorbefüll-Verfahren so frühzeitig durchgeführt wird, dass die Vorbefüllung des Niederdruckspeichers (14) vor bzw. bei Fahrbeginn sichergestellt ist.

3. Verfahren nach einem der vorhergehenden Ansprüche, **dadurch gekennzeichnet, dass** das Auslassventil (13) geöffnet wird, wenn der Fahrer vom Bremspedal (1) geht und der Vordruck einen Schwellenwert unterschreitet.

4. Verfahren nach einem der vorhergehenden Ansprüche, **dadurch gekennzeichnet, dass** der Niederdruckspeicher (14) nur bis zu einem vorgegebenen Füllstand befüllt wird.

5. Verfahren nach einem der vorhergehenden Ansprüche, **dadurch gekennzeichnet, dass** der Füllstand des Niederdruckspeichers (14) nach einem Regeleingriff, bei dem die Hydraulikpumpe (9) betätigt wurde, auf ein vorgegebenes Niveau gebracht wird.

6. Bremsanlage für Kraftfahrzeuge mit einem zwischen einem Hauptbremszylinder (4) und dem Einlassventil (10) einer Radbremse (11) angeordneten Ventil (8), einem der Radbremse (11) nachgeordneten Auslassventil (13), einer Hydraulikpumpe (9), einem in der Ansaugleitung (6) der Hydraulikpumpe (9) und am Ausgang des Auslassventils (13) angeordneten Niederdruckspeicher (14) und einem Steuergerät (18) zum Ansteuern der Hydraulikpumpe (9) und der Ventile (8,10,13), wobei das Steuergerät (18) derart eingerichtet ist, dass ein Verfahren zum Vorbefüllen des Niederdruckspeichers (14) durchgeführt werden kann, bei dem eine Betätigung des Fuß-Bremspedals (1) sensorisch erkannt und im Falle einer Betätigung das Ventil (8) geschlossen wird, um den an der Radbremse (11) wirkenden Bremsdruck einzusperren, und das Auslassventil (13) geöffnet wird, um den Bremsdruck in den Niederdruckspeicher (14) zu entlassen.
**dadurch gekennzeichnet,**
**dass** die Betätigung des Fuß-Bremspedals (1) und das Schließen des Ventils (8) vor dem Einschalten der Zündung des Kraftfahrzeugs erfolgt.

7. Bremsanlage nach Anspruch 6, **dadurch gekennzeichnet, dass** das Steuergerät (18) derart eingerichtet ist, dass eine Betätigung des Fuß-Bremspedals (1) bereits vor dem Einschalten der Zündung des Kraftfahrzeugs erkannt wird.

8. Bremsanlage nach Anspruch 6 oder 7, **dadurch gekennzeichnet, dass** das Steuergerät (18) das Ventil (8) bereits vor dem Einschalten der Zündung schließt, wenn der Brems-Vordruck einen Schwellenwert überschreitet.

9. Bremsanlage nach Anspruch 6, 7 oder 8, **dadurch gekennzeichnet, dass** der Niederdruckspeicher (14) einen Fullstandsensor (20) aufweist, mit dem der Füllstand des Niederdruckspeichers (14) gemessen werden kann

## Claims

1. Method for prefilling a low-pressure accumulator (14) of a motor vehicle braking system (17) which comprises a valve (8) arranged between a master brake cylinder (4) and the inlet valve (10) of a wheel brake (11), an outlet valve (13) which is positioned downstream of the wheel brake (11), and a low-pressure accumulator (14) arranged in the induction line (6) of a hydraulic pump (9) and at the outlet of the outlet valve (13), comprising the following steps:
- building up brake pressure by actuating the foot-operated brake pedal (1),
- closing the valve (8) in order to confine the brake pressure acting at the wheel brake (11), and
- opening the outlet valve (13) to release the brake pressure into the low-pressure accumulator (14),
**characterized**
**in that** the actuation of the foot-operated brake pedal (1) and the closure of the valve (8) take place before the activation of the ignition of the motor vehicle.

2. Method according to Claim 1, **characterized in that** the prefilling method is carried out so early that the prefilling of the low-pressure accumulator (14) is ensured before or upon commencement of driving.

3. Method according to one of the preceding claims, **characterized in that** the outlet valve (13) is opened if the driver releases the brake pedal (1) and the admission pressure falls below a threshold value.

4. Method according to one of the preceding claims, **characterized in that** the low-pressure accumulator (14) is filled only up to a predefined filling level.

5. Method according to one of the preceding claims, **characterized in that** the filling level of the low-pressure accumulator (14) is adjusted to a predefined level after a regulating intervention during which the hydraulic pump (9) was actuated.

6. Braking system for motor vehicles having a valve (8) arranged between a master brake cylinder (4) and the inlet valve (10) of a wheel brake (11), having an outlet valve (13) which is positioned downstream of the wheel brake (11), having a hydraulic pump (9), having a low-pressure accumulator (14) which is arranged in the induction line (6) of the hydraulic pump (9) and at the outlet of the outlet valve (13), and having a control unit (18) for activating the hydraulic pump (9) and the valves (8, 10, 13), with the control unit (18) being set up such that it is possible to carry out a method for prefilling the low-pressure accumulator (14), in which method an actuation of the foot-operated brake pedal (1) is detected by sensors and, in the event of an actuation, the valve (8) is closed in order to confine the brake pressure acting at the wheel brake (11), and the outlet valve (13) is opened in order to release the brake pressure into the low-pressure accumulator (14),
**characterized**
**in that** the actuation of the foot-operated brake pedal (1) and the closure of the valve (8) take place before the activation of the ignition of the motor vehicle.

7. Braking system according to Claim 6, **characterized in that** the control unit (18) is set up such that an actuation of the foot-operated brake pedal (1) is already detected before the activation of the ignition of the motor vehicle.

8. Braking system according to Claim 6 or 7, **characterized in that** the control unit (18) already closes the valve (8) before the activation of the ignition if the brake admission pressure exceeds a threshold value.

9. Braking system according to Claim 6, 7 or 8, **characterized in that** the low-pressure accumulator (14) has a filling level sensor (20), by means of which the filling level of the low-pressure accumulator (14) can be measured.

## Revendications

1. Procédé pour pré-remplir un accumulateur basse pression (14) d'une installation de freinage d'un véhicule automobile (17), qui comprend une soupape (8) disposée entre un cylindre de frein principal (4) et la soupape d'admission (10) d'un frein de roue (11), une soupape de sortie (13) placée en aval du frein de roue (11) et un accumulateur basse pression (14) disposé dans la conduite d'aspiration (6) d'une pompe hydraulique (9) et à la sortie de la soupape de sortie (13), comprenant les étapes suivantes :
- augmentation de la pression de freinage par actionnement de la pédale de frein (1),
- fermeture de la soupape (8), afin de bloquer la pression de freinage agissant sur le frein de roue (11), et
- ouverture de la soupape de sortie (13) afin de détendre la pression de freinage dans l'accumulateur basse pression (14),
**caractérisé en ce que**
l'actionnement de la pédale de frein (1) et la fermeture de la soupape (8) s'effectuent avant le déclenchement de l'allumage du véhicule automobile.

2. Procédé selon la revendication 1, **caractérisé en ce que** le procédé de pré-remplissage est réalisé suffisamment en avance pour que le pré-remplissage de l'accumulateur basse pression (14) soit garanti avant ou au moment du début de la conduite.

3. Procédé selon l'une quelconque des revendications précédentes, **caractérisé en ce que** la soupape de sortie (13) est ouverte lorsque le conducteur soulève le pied de la pédale de frein (1) et que la pression d'alimentation est inférieure à une valeur seuil.

4. Procédé selon l'une quelconque des revendications précédentes, **caractérisé en ce que** l'accumulateur basse pression (14) n'est rempli que jusqu'à un niveau de remplissage prédéfini.

5. Procédé selon l'une quelconque des revendications précédentes, **caractérisé en ce que** le niveau de remplissage de l'accumulateur basse pression (14) est amené à un niveau prédéfini après une intervention de régulation au cours de laquelle la pompe hydraulique (9) a été activée.

6. Installation de freinage pour véhicules automobiles, comprenant une soupape (8) disposée entre un cylindre de frein principal (4) et la soupape d'admission (10) d'un frein de roue (11), une soupape de sortie (13) placée en aval du frein de roue (11), une pompe hydraulique (9) et un accumulateur basse pression (14) disposé dans la conduite d'aspiration (6) d'une pompe hydraulique (9) et à la sortie de la soupape de sortie (13), ainsi qu'un appareil de commande (18) pour commander la pompe hydraulique (9) et les soupapes (8, 10, 13), l'appareil de commande (18) étant prévu de telle sorte qu'un procédé de pré-remplissage de l'accumulateur basse pression (14) puisse être mis en oeuvre, un actionnement de la pédale de frein (1) étant détecté par un capteur et en cas d'actionnement la soupape (8) étant fermée afin de bloquer la pression de freinage agissant au niveau du frein de roue (11), et la soupape de sortie (13) étant ouverte afin de détendre la pression de freinage dans l'accumulateur basse pression (14),
**caractérisée en ce que**
l'actionnement de la pédale de frein (1) et la fermeture de la soupape (8) s'effectuent avant le déclenchement de l'allumage du véhicule automobile.

7. Installation de freinage selon la revendication 6, **caractérisée en ce que** l'appareil de commande (18) est prévu de telle sorte qu'un actionnement de la pédale de frein (1) soit détecté déjà avant l'enclenchement de l'allumage du véhicule automobile.

8. Installation de freinage selon la revendication 6 ou 7, **caractérisée en ce que** l'appareil de commande (18) ferme la soupape (8) déjà avant le déclenchement de l'allumage, lorsque la pression d'alimentation du frein est supérieure à une valeur seuil.

9. Installation de freinage selon la revendication 6, 7 ou 8, **caractérisée en ce que** l'accumulateur basse pression (14) présente un capteur de niveau de remplissage (20) avec lequel le niveau de remplissage de l'accumulateur basse pression (14) peut être mesuré.
